# FASCICULE DE BREVET EUROPEEN

(11) **EP 0 437 986 B1**
(45) Date de publication et mention de la délivrance du brevet: **08.12.1993**
(21) Numéro de dépôt: 90400154.2
(22) Date de dépôt: 19.01.1990
(51) Int. Cl.: F16L 3/10

(54) **Collier d'attache pour tuyau**
Schlauchschelle
Hose clamp

(43) Date de publication de la demande: 24.07.1991
(73) Titulaire: LA CELTIQUE S.A., F-92100 Boulogne (FR)
(72) Inventeur: Weiss, Jacques, F-92380 Garches (FR)
(74) Mandataire: Chameroy, Claude

(56) Documents cités:
- FR-A- 910 563
- US-A- 4 275 484

## Description

La présente invention concerne un collier d'attache pour tuyau, comprenant au moins une bande métallique circulaire encerclant le tuyau, avec deux extrémités en recouvrement s'accrochant l'une à l'autre grâce à des moyens d'accrochage mutuels, et a trait plus particulièrement aux colliers servant à attacher ou à supporter les tuyaux et canalisations le long des murs et parois auxquels ils doivent être fixés.

Généralement, ces colliers sont formés de deux demi-colliers métalliques dont l'un est solidaire de la fixation au mur (par ex. un boulon) et dont l'autre est relié au premier par des vis de serrage traversant des ailes radiales des demi-colliers. L'invention vise à simplifier les colliers de ce genre, en particulier leur système de serrage sur le tuyau, afin de rendre la pose de ces colliers plus commode et plus rapide sur les chantiers d'installation.

Le document FR-A-910 563 décrit un collier qui peut être mis en place facilement sur un tuyau sans avoir recours à un outil quelconque. Toutefois, il s'agit d'un collier de serrage, destiné principalement aux tuyaux souples et constitué essentiellement par une bande souple de feuillard. Un tel collier ne permet donc pas de fixer le tuyau à un support.

La présente invention a ainsi pour objet un collier d'attache pour tuyau du type susmentionné, caractérisé en ce que l'une des extrémités présente un double coude formant d'abord une partie dirigée vers l'extérieur puis une partie dirigée vers l'arrière, tandis que l'autre extrémité de la bande s'étend au-dessus de la partie repliée vers l'arrière, les deux parties en recouvrement présentant, d'une part lesdits moyens d'accrochage mutuels et d'autre part des ouvertures en correspondance permettant le passage d'un outil permettant le pliage vers l'arrière de la première extrémité autour de son premier coude pour le serrage du collier par la tension subséquente exercée sur l'extrémité en recouvrement.

Le collier peut être formé de deux demi-colliers et dans ce cas l'assemblage s'opère, d'un côté, par un simple accrochage des extrémités correspondantes des demi-colliers et, de l'autre côté, par les moyens d'accrochage et de serrage ci-dessus indiqués, de sorte que l'assemblage du collier autour du tuyau puisse être fait sans avoir à manipuler de pièces mobiles et détachables susceptibles d'échapper à l'opérateur.

Un exemple de réalisation d'un tel collier est décrit ci-après en référence au dessin ci-joint dans lequel :

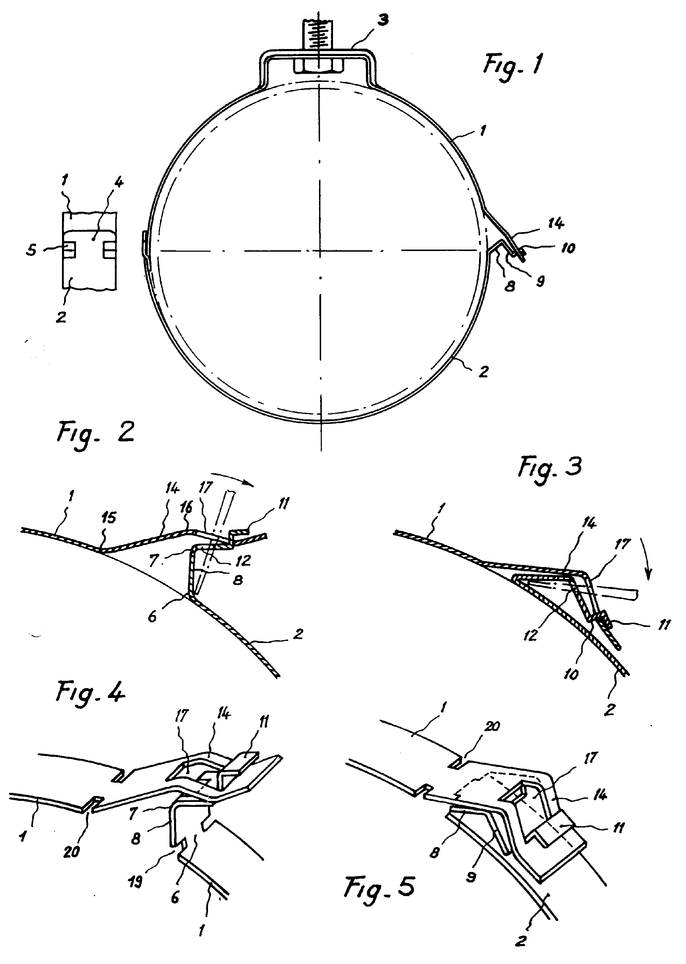

- la figure 1 montre le collier avant serrage sur le tuyau,
- les figures 2, 3 et 4, 5 sont des vues partielles illustrant plus en détail les moyens d'accrochage et de serrage.

Ce collier est formé de deux demi-colliers demi-circulaires 1 et 2, l'un présentant un pontet 3 percé pour le passage d'un boulon de fixation à la paroi. D'un côté, les extrémités correspondantes des demi-colliers sont accrochées l'une à l'autre par l'engagement d'une partie découpée en forme de T 4, sur le collier 2, dans des pattes repliées 5 découpées sur le collier 1. Ce système d'accrochage est en soi connu ; il offre l'avantage d'être simple et de n'avoir aucune pièce mobile. De l'autre côté, les demi-colliers sont reliés l'un à l'autre par le dispositif d'accrochage et de serrage ci-après décrit.

Le demi-collier 2 présente une extrémité avec un double coude 6 et 7 formant d'abord une partie 8 dirigée vers l'extérieur, à peu près radialement, puis une partie 9 dirigée vers l'arrière. Cette partie 9 se termine par une patte de largeur réduite 10 repliée vers l'extérieur et terminée par un rebord 11. Sur la partie 9, près du second coude 7, est percée une fente transversale étroite 12.

L'extrémité de l'autre demi-collier 1 présente une partie qui se prolonge suffisamment pour s'étendre au-dessus de la partie 9 du demi-collier 2. Cette extrémité peut être légèrement coudée en 15 et 16 pour que le corps du demi-collier reste appliqué sur le tuyau en permettant le recouvrement de la partie 9 par la partie 14. Au droit de la partie 9 l'extrémité 14 présente une ouverture 17 qui, d'une part, permet le passage de la patte 10 pour l'accrochage mutuel des deux demi-colliers et qui, d'autre part, vient en correspondance avec la fente 12 de la partie 9. Une fois l'accrochage opéré par passage de la patte 10 dans l'ouverture 17 (ce qui ne présente aucune difficulté avec la flexibilité relative des colliers) on introduit alors dans la fente 12 un outil plat tel qu'un tournevis jusqu'au premier coude 6, puis en formant levier on plie vers l'arrière autour du coude 6 la partie 8 du collier 2, ce qui a pour effet de tirer sur l'extrémité 14 par la patte d'accrochage 10 et de serrer l'ensemble du collier sur le tuyau. En fin de serrage les deux extrémités des demi-colliers sont appliquées étroitement l'une sur l'autre et ne forment qu'une légère saillie extérieure tandis que l'angle aigu formé maintenant par le coude 6 donne une bonne résistance à la réaction de desserrage du collier.

Pour faciliter la déformation des parties pliées lors du serrage (notamment dans le cas de colliers de diamètre relativement grand conduisant à utiliser des bandes métalliques assez épaisses) on peut affaiblir la section des coudes de pliage 6 et 15 par tout moyen approprié, par exemple avec des encoches 19, 20. Par le choix d'une malléabilité convenable pour le métal de la bande on peut obtenir que le collier soit démontable et réutilisable.

## Revendications

1. Collier d'attache pour tuyau, comprenant au moins une bande métallique circulaire (1, 2) encerclant le tuyau, avec deux extrémités en recouvrement (8, 9, 14) s'accrochant l'une à l'autre grâce à des moyens d'accrochage mutuels (10, 11, 17), caractérisé en ce que l'une des extrémités (8, 9) présente un double coude (6, 7) formant d'abord une partie (8) dirigée vers l'extérieur puis une partie (9) dirigée vers l'arrière, tandis que l'autre extrémité (14) de la bande s'étend au-dessus de cette partie (9) repliée vers l'arrière, les deux parties en recouvrement (9, 14) présentant, d'une part, lesdits moyens d'accrochage mutuels (10, 11, 17) et d'autre part, des ouvertures (12, 17) en correspondance permettant le passage d'un outil pour le pliage vers l'arrière de la première extrémité (8, 9) autour de son premier coude (6) pour le serrage du collier par la tension subséquente exercée sur l'extrémité en recouvrement (14).

2. Collier selon la revendication 1, caractérisé en ce que les moyens d'accrochage mutuels des parties des extrémités venant en recouvrement consistent en une patte repliée (10, 11) de l'une des parties pénétrant dans une ouverture correspondante (17) de l'autre partie.

3. Collier selon la revendication 1, caractérisé en ce que l'extrémité (8, 9) à double coude (6, 7) présente une section réduite (19) à l'endroit de son premier coude (6) en vue de favoriser la déformation par pliage lors du serrage sur le tuyau.

## Patentansprüche

1. Schlauchschelle, bestehend aus mindestens einem den Schlauch umgebenden, kreisförmigen Metallband (1,2) mit zwei sich einander überdeckenden Enden(8,9,14), die mittels gegenseitigen Verriegelungen( 10,11, 17) miteinander verriegelbar sind,
dadurch gekennzeichnet,
daß eines der Enden (8,9) einen doppelten Knick (6,7) aufweist, wodurch sowohl ein nach außen gerichteter Abschnitt (8) als auch ein nach hinten gerichteter Abschnitt (9) ausgebildet ist, wohingegen sich das andere Ende (14) des Bandes von oben über diesen nach hinten gebogenen Abschnitt (9) erstreckt,und die sich überdeckenden Abschnitte (9,14) einerseits die genannten gegenseitigen Verriegelungsmittel (10,11,17) und andererseits entsprechende Öffnungen (12,17) zum Einsetzen eines Werkzeugs aufweisen,um das erste Ende (8,9) um seinen ersten Knick (6) nach hinten zu biegen, um die Schelle durch die auf das überdeckenden Ende (14) aufgebrachte Spannung festzuklemmen.

2. Schlauchschelle nach Anspruch 1 ,dadurch gekennzeichnet, daß die gegenseitigen Verriegelungsmittel der sich überdeckenden Endabschnitte aus einer umgebogenen Lasche (10,11) eines der Abschnitte, die in eine entsprechende Öffnung (17) des anderen Abschnitts eingreift, besteht.

3. Schlauchschelle nach Anspruch 1, dadurch gekennzeichnet, daß das Ende (8,9) mit dem doppelten Knick(6,7) im Bereich seines ersten Knicks (6) einen verringerten Querschnitt (19) aufweist,um die Verformung beim Umbiegen während des Klemmvorgangs auf dem Schlauch zu erleichtern.

## Claims

1. A hose clamp, comprising at least one circular metal band (1,2) encircling the hose and two overlapping ends (8,9,14) hooking on to each other with the aid of mutual hooking means (10,11,17), characterized in that one end (8,9) has a double elbow (6,7) forming first a branch (8) directed outwardly and then a branch (9) directly backwardly, whilst the other end (14) of the band extends above the said backwardly directed branch (9), the overlapping branches (9,14) having on the one hand mutual hooking means (10,11,17) and on the other hand registering holes (12,17) allowing the insertion of a tool for the backward bending of the first end (8,9) about its first elbow (6) to hold the clamp by the tension subsequently applied to the overlapping end (14).

2. A clamp as in Claim 1, characterized in that the mutual hooking means on the overlapping ends consist of a backwardly bent tab (10,11) on one of the branches penetrating into a registering hole (17) on the other branch.

3. A clamp as in Claim 1, characterized in that the end (8,9) having a double elbow (6,7) has a reduced cross-section (19) at the first elbow (6) to facilitate its bending when the clamp is tightened on the hose.
